# FASCICULE DE BREVET EUROPEEN

(11) **EP 1 101 691 B1**
(45) Date de publication et mention de la délivrance du brevet: **29.12.2004**
(21) Numéro de dépôt: 00403181.1
(22) Date de dépôt: 15.11.2000
(51) Int. Cl.: B62D 25/08

(54) **Fixation quart avant sur traverse**
Vorder- Viertel- Befestigung auf Querträger
Front quarter fixation on cross member

(30) Priorité: 15.11.1999 FR 9914279
(43) Date de publication de la demande: 23.05.2001
(73) Titulaire: COMPAGNIE PLASTIC OMNIUM, 69007 Lyon (FR); Renault s.a.s., 92100 Boulogne Billancourt (FR)
(72) Inventeur: Cheron, Hugues, 01800 Bourg Saint Christophe (FR); Decker, Laurent, 69100 Villeurbanne (FR); Ghiringhelli, Bruno, 52200 Langres (FR); Liadouze, Alain, 78530 Buc (FR); Durbize, Marc, 78760 Jouars-Pont-de-Chartrain (FR)
(74) Mandataire: Remy, Vincent Noel Paul

(56) Documents cités:
- WO-A-99/54187
- FR-A- 2 754 235

## Description

La présente invention concerne une face avant technique de véhicule automobile présentant une structure modulaire, telle que définie dans le préambule de la revendication 1 et connue du document WO-9954187-A.

On connaît les faces avant techniques de véhicules automobiles qui sont des structures placées à l'avant des véhicules et utilisées comme support du radiateur et de différents autres organes agencés autour du radiateur.

Ces faces avant techniques sont positionnées directement sur le châssis du véhicule et donnent généralement satisfaction dans leur fonction traditionnelle de support d'organes techniques, en permettant notamment d'alléger les opérations de montage sur la chaîne du véhicule, du fait qu'elles peuvent être pré-équipées en dehors de la chaîne de montage avant d'être installées sur le véhicule.

En revanche, les faces avant techniques traditionnelles ne peuvent pas être utilisées pour supporter des pièces de carrosserie ou des optiques, qui doivent être convenablement positionnées par rapport au reste de la carrosserie du véhicule.

La présente invention vise à fournir une face avant technique de véhicule automobile, qui, en plus de ses fonctions traditionnelles de support d'organes techniques est à même de supporter des pièces de carrosserie ou des optiques convenablement positionnées par rapport au reste de la carrosserie du véhicule.

La présente invention a pour objet une face avant technique de véhicule automobile comprenant au moins une traverse supérieure et, à chaque extrémité de la traverse supérieure, une pièce support apte à supporter au moins une optique du véhicule, la liaison entre la traverse supérieure et chaque pièce support étant assurée par encastrement de l'une dans l'autre, assorti d'une possibilité de réglage de chaque pièce support par rapport à la traverse dans une direction sensiblement horizontale, perpendiculaire à l'axe du véhicule.

Ce réglage permet le rattrapage des tolérances de fabrication, tant de la caisse du véhicule que de la traverse de la face avant technique, afin que cette dernière se trouve en référence par rapport au reste de la carrosserie, ce qui est très important si la face avant technique supporte des optiques ou des pièces de carrosserie devant se trouver dans une position très précise par rapport au reste de la carrosserie, comme par exemple un bas de caisse ou un spoiler.

En effet, la face avant technique selon l'invention peut être précisément ajustée en largeur pour s'adapter à la distance séparant notamment les ailes du véhicule, afin que les optiques supportées par les pièces support de la face avant soient positionnées de manière adéquate par rapport aux ailes du véhicule.

Il en va de même pour un éventuel spoiler ou bas de caisse, qui doit venir à affleurement des bords avant des ailes du véhicule.

En plus de son aptitude au réglage, la liaison entre la traverse et chaque pièce support est un encastrement pouvant supporter des sollicitations mécaniques résultant notamment du claquage du capot, des efforts d'arrachage et de déformation subis lors d'un choc ou des efforts issus de la caisse lors du roulage et générant des déplacements relatifs des pièces les unes par rapport aux autres, ainsi que des bruits.

Dans un mode de réalisation particulier de l'invention, l'encastrement réglable est en outre démontable, ce qui présente deux avantages.

Tout d'abord, le caractère démontable de l'encastrement est avantageux pour le montage de la face avant technique sur le véhicule car les deux pièces supports peuvent être pré-montées sur la traverse sans réglage précis, puis leur position sur la traverse peut être ajustée sur un gabarit ou directement lors du montage sur le véhicule, en utilisant le jeu offert par le réglage de l'encastrement, après quoi, les pièces supports peuvent être fermement assujetties à la traverse, conférant à la face avant technique une géométrie sur mesure, propre au véhicule considéré.

De plus, grâce à la possibilité de démontage de la liaison, la réparation du véhicule est facilitée et son coût est diminué car, après un choc, les dégâts ne s'étendent généralement qu'à une seule pièce support, laquelle peut être remplacée grâce à l'invention en préservant, dans la majorité des cas, l'autre pièce support et la traverse supérieure.

Dans un mode de réalisation particulier de l'invention, chaque pièce support est un quart avant au sens du brevet français de la demanderesse publié sous le n° 2 754 235.

Ce quart avant comporte des logements internes pour recevoir l'optique et d'autres organes du véhicule, tels que clignotants, lave vitres, boîtiers électriques ou électroniques, bocal lave vitres, etc.

Dans un mode de réalisation particulier, l'encastrement est réalisé grâce à des nervures prévues sous la traverse.

Ces nervures peuvent être obtenues par surmoulage d'un profilé métallique constituant l'âme métallique de la traverse.

Du côté de la pièce support, on prévoit des fentes pour accueillir les nervures.

Ces fentes sont avantageusement munies de dents opposées en saillie des parois des fentes. Ces dents pincent les nervures de la traverse pour assurer un encastrement de bonne qualité et une continuité mécanique suffisante entre la traverse supérieure et les pièces supports.

Cette continuité mécanique est particulièrement avantageuse lorsque les pièces supports sont assujetties par leur extrémité inférieure aux longerons du véhicule car, dans ce cas, la rigidité des longerons peut être transmise par les pièces supports jusqu'à la traverse supérieure, via l'encastrement précité, ce qui rigidifie l'ensemble de la face avant technique.

Dans un mode de réalisation particulier de l'invention, des orifices de fixation sont ménagés sur la traverse et sur chaque pièce support, pour permettre le pré-montage des pièces supports et leur fixation définitive à la traverse. Les orifices de la traverse sont de préférence oblongs, ce qui constitue le moyen de réglage permettant le rattrapage des tolérances de fabrication.

Dans le but de mieux faire comprendre l'invention, on va en décrire maintenant un mode de réalisation donné à titre d'exemple non limitatif, en référence au dessin annexé dans lequel :

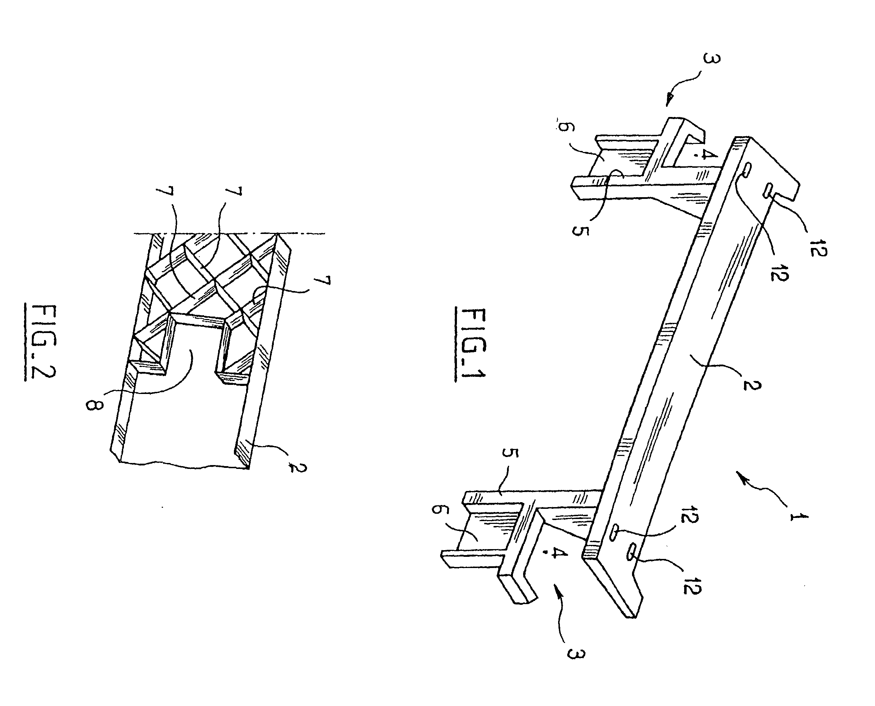

- la figure 1 est une vue en perspective d'une face avant technique selon l'invention,
- la figure 2 est une vue de dessous d'une partie de la traverse supérieure de la figure 1,
- la figure 3 est une vue rapprochée d'une partie de la traverse supérieure et d'une partie de la pièce support, vues de dessus, avant leur assemblage, selon une variante de réalisation.

La face avant technique 1 représentée sur le dessin comprend une traverse supérieure 2 ainsi que deux pièces support latérales 3 qui sont également désignées sous le terme de quart avant.

Chaque quart avant 3 comprend un logement 4 pour recevoir une optique du véhicule et différents autre logements 5, 6 pour recevoir des organes traditionnellement logés dans le compartiment moteur du véhicule, à savoir un bocal lave-glaces, un gicleur de lave vitres, des clignotants, etc.

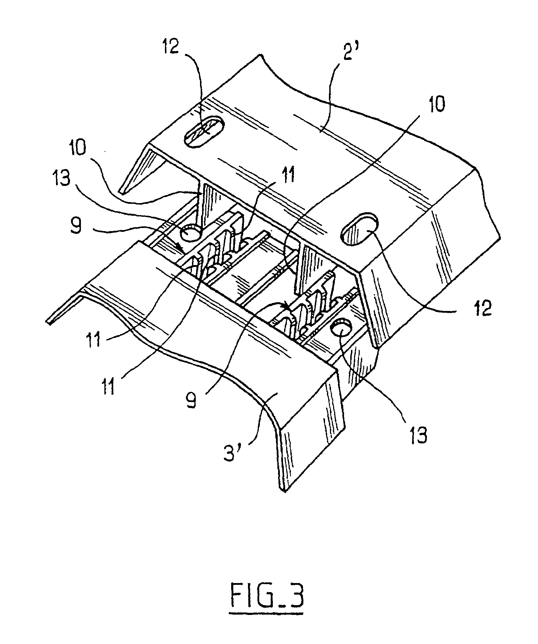

La liaison entre la traverse supérieure 2 et chaque quart avant 3 est réalisée par encastrement grâce à une géométrie particulière de la traverse supérieure, géométrie qui est mieux visible sur les figures 2 et 3.

Dans l'exemple représenté, la traverse supérieure 2 est un profilé métallique à section en U muni de nervures 7 dans sa partie convexe dirigée vers le bas.

Ces nervures 7 définissent, au droit de chaque quart avant, un logement 8 apte à recevoir une partie correspondante du quart avant par encastrement avec les nervures de la traverse supérieure, l'encastrement étant toutefois assorti d'une possibilité de réglage longitudinalement à la traverse, c'est-à-dire, par rapport au véhicule, selon une direction sensiblement horizontale perpendiculaire à la direction d'avancement du véhicule.

Dans la variante de la figure 3, la partie supérieure du quart avant 3' comporte des fentes 9 pour accueillir les nervures 10 de la traverse supérieure 2', ces fentes étant munies de dents opposées 11 en saillie des parois des fentes 9.

La fonction des dents opposées 11 est de pincer les nervures 10 de la traverse pour assurer un encastrement optimal et une continuité mécanique suffisantes entre la traverse supérieure et les quarts avant.

La traverse supérieure 2, 2' est munie de deux trous oblongs 12 se trouvant en correspondance avec des orifices circulaires taraudés 13 du quart avant, lorsque celui-ci est emboîté dans la traverse.

Des vis de fixation (non représentées) engagées dans les trous oblongs 12 et dans les orifices taraudés 13 du quart avant, réalisent la solidarisation des quarts avant sur la traverse supérieure.

Les trous oblongs autorisent le réglage de positionnement des quarts avant par rapport à la traverse, conformément à l'invention.

Ce réglage peut être effectué sur le véhicule lors du montage de la face avant technique ou sur un gabarit dans l'hypothèse où la face avant technique doit être préréglée pour être montée telle quelle sur le véhicule.

Il est bien entendu que le mode de réalisation qui vient d'être décrit ne présente aucun caractère limitatif et qu'il pourra recevoir toute modification désirable, sans sortir pour cela du cadre de l'invention.

## Revendications

1. Face avant technique de véhicule automobile comprenant au moins une traverse supérieure (2, 2') et, à chaque extrémité de la traverse supérieure, une pièce support (3, 3'), apte à supporter au moins une optique du véhicule, comprenant une liaison entre la traverse supérieure et chaque pièce support **caractérisée par le fait que** la liaison est assurée par encastrement de l'une dans l'autre, assorti d'une possibilité de réglage relatif de chaque pièce support et de la traverse dans une direction sensiblement horizontale, perpendiculaire à l'axe du véhicule.

2. Face avant technique selon la revendication 1, **caractérisée par le fait que** l'encastrement réglable est démontable.

3. Face avant technique selon l'une quelconque des revendications 1 et 2 **caractérisée par le fait que** chaque pièce support (3, 3') est un quart avant.

4. Face avant technique selon l'une quelconque des revendications 1 à 3, **caractérisé par le fait que** l'encastrement est réalisé grâce à des nervures (10) prévues sous la traverse supérieure (2').

5. Face avant technique selon la revendication 4, **caractérisée par le fait que** les nervures (10) sont obtenues par surmoulage d'un profilé métallique constituant l'âme métallique de la traverse supérieure.

6. Face avant technique selon la revendication 5, **caractérisée par le fait que** la pièce support (3') comporte des fentes (9) pour accueillir les nervures (10) de la traverse supérieure (2').

7. Face avant technique selon la revendication 6, **caractérisée par le fait que** les fentes (9) des pièces supports sont munies de dents opposées (11) en saillie des parois des fentes, ces dents servant à pincer les nervures (10) de la traverse pour assurer un encastrement de bonne qualité et une continuité suffisante entre la traverse supérieure et les pièces supports.

8. Face avant technique selon l'une quelconque des revendications 1 à 7, **caractérisée par le fait que** des orifices de fixation (12) sont ménagés sur la traverse (2, 2') et sur chaque pièce support (3, 3'), pour permettre le prémontage des pièces supports et leur fixation définitive à la traverse.

9. Face avant technique selon la revendication 8, **caractérisée par le fait que** les orifices (12) de la traverse supérieure sont oblongs.

## Claims

1. Motor vehicle functional front end comprising at least one upper crossmember (2, 2') and, at each end of the upper crossmember, a support piece (3, 3') capable of supporting at least one lighting unit of the vehicle, comprising a connection between the upper crossmember and each support piece, **characterized in that** the connection is provided by one nesting into the other, combined with a possibility of relative adjustment of each support piece and of the crossmember in a roughly horizontal direction perpendicular to the axis of the vehicle.

2. Functional front end according to claim 1, **characterized in that** the adjustable nesting is demountable.

3. Functional front en according to either one of claims 1 and 2, **characterized in that** each support piece (3, 3'), is a front quadrant.

4. Functional front end according to any one of claims 1 to 3, **characterized in that** the nesting is performed by virtue of ribs (10) provided under the upper crossmember (2').

5. Functional front end according to claim 4, **characterized in that** the ribs (10) are obtained by overmoulding a metal section piece which constitutes the metal core of the upper crossmember.

6. Functional front end according to claim 5, **characterized in that** the support piece (3') h as slots (9) to accommodate the ribs (10) of the upper crossmember (2').

7. Functional front end according to claim 6, **characterized in that** the slots (9) of the support pieces are fitted with opposed teeth (11) projecting from the walls of the slots, these teeth serving to grip the ribs (10) of the crossmember to provide a good quality fit and sufficient continuity between the upper crossmember and the support pieces.

8. Functional front end according to any one of claims 1 to 7, **characterized in that** attachment orifices (12) are formed in the crossmember (2, 2') and on each support piece (3, 3') so as to allow the support pieces to be pre-assembled and definitively attached to the crossmember.

9. Functional front end according to claim 8, **characterized in that** the orifices (12) in the upper crossmember are oblong.

## Patentansprüche

1. Technische Vorderseite eines Kraftfahrzeugs, umfassend mindestens eine obere Querstrebe (2, 2') und an jedem Ende der oberen Querstrebe einen Stützteil (3, 3'), der mindestens eine Fahrzeugoptik tragen kann, umfassend eine Verbindung zwischen der oberen Querstrebe und jedem Stützteil, **dadurch gekennzeichnet, dass** die Verbindung durch Einbau ineinander sicher gestellt ist, mit der Möglichkeit der Dreheinstellung jedes Stützteils und der Querstrebe in eine im Wesentlichen horizontale Richtung senkrecht auf die Achse des Fahrzeugs.

2. Technische Vorderseite nach Anspruch 1, **dadurch gekennzeichnet, dass** der einstellbare Einbau abnehmbar ist.

3. Technische Vorderseite nach einem der Ansprüche 1 und 2, **dadurch gekennzeichnet, dass** jeder Stützteil (3, 3') ein vorderes Viertel ist.

4. Technische Vorderseite nach einem der Ansprüche 1 bis 3, **dadurch gekennzeichnet, dass** der Einbau mit Rippen (10) erfolgt, die unter der oberen Querstrebe (2') vorgesehen sind.

5. Technische Vorderseite nach Anspruch 4, **dadurch gekennzeichnet, dass** die Rippen (10) durch überformen auf ein Metallprofil, das den Metallkern der oberen Querstrebe bildet, erhalten werden.

6. Technische Vorderseite nach Anspruch 5, **dadurch gekennzeichnet, dass** der Stützteil (3') Schlitze (9) umfasst, um die Rippen (10) der oberen Querstrebe (2') aufzunehmen.

7. Technische Vorderseite nach Anspruch 6, **dadurch gekennzeichnet, dass** die Schlitze (9) der Stützteile mit gegenüber liegenden Zähnen (11) versehen sind, die auf den Wänden der Schlitze vorspringen, wobei diese Zähne dazu dienen, die Rippen (10) der Querstrebe einzuklemmen, um einen qualitativ hochwertigen Einbau und eine ausreichende Durchgängigkeit zwischen der oberen Querstrebe und den Stützteilen sicher zu stellen.

8. Technische Vorderseite nach einem der Ansprüche 1 bis 7, **dadurch gekennzeichnet, dass** Befestigungsöffnungen (12) auf der Querstrebe (2, 2') und auf jedem Stützteil (3, 3') vorgesehen sind, um die Vormontage der Stützteile und ihre endgültige Befestigung an der Querstrebe zu ermöglichen.

9. Technische Vorderseite nach Anspruch 8, **dadurch gekennzeichnet, dass** die Öffnungen (12) der oberen Querstrebe länglich sind.
